Europäisches Patentamt

European Patent Office

Office européen des brevets

(11) Publication number: **0 299 628**
**A1**

# EUROPEAN PATENT APPLICATION

(21) Application number: 88305564.2

(22) Date of filing: 17.06.88

(51) Int. Cl.⁴: **B29D 11/00**

(30) Priority: 18.06.87 US 63329

(43) Date of publication of application:
**18.01.89 Bulletin 89/03**

(84) Designated Contracting States:
**AT CH DE ES FR GB IT LI SE**

(71) Applicant: **OCULAR TECHNOLOGIES INC.**
**3803B Computer Drive**
**Raleigh North Carolina 27609(US)**

(72) Inventor: **Chen, Richard Y S**
**1021 Kinsdale Drive**
**Raleigh North Carolina 27615(US)**

(74) Representative: **Collier, Jeremy Austin Grey et al**
**J.A.Kemp & Co. 14, South Square Gray's Inn**
**London WC1R 5EU(GB)**

(54) **Lens shell.**

(57) A contact lens (14) having a finished shape including a concave base curve (12) and a convex front curve (18) is made by molding a plastic blank (10) having a pair of opposite curved surfaces (11, 16) respectively approximating the base curve (12) and front curve (18). The surfaces (11, 16) of the blank (10) are machined to produce a lens (14) having the finished shape. Since these surfaces as molded conform approximately to the finished shape, only a minimum of machining is necessary as compared to the machining required in conventional methods. This reduces the time needed to manufacture a lens and extends the useful life of the cutting tool used for machining.

FIG-5

## LENS SHELL

This invention relates to contact lenses and, more particularly, to a novel method of making contact lenses that is faster and less expensive than conventional methods, to a novel lens blank, and to a mold for making the blank.

Contact lenses are conventionally made by manufacturing a "button" and then machining the button to produce a finished shape including a base curve and a front curve. The base curve is described by the surface of the contact lens that is opposed to the eye of the wearer, and the front curve is described by the surface of the contact lens that is opposite the base curve.

Contact lenses are concavo-convex (concave on one side and convex on the other). The base curve is concave and has a radius of curvature that substantially equals the radius of curvature of the eyeball of the wearer adjacent to the iris, and the front curve is convex and has a radius of curvature that is related to the radius of curvature of the base curve in such a manner as to produce the refractive correction required by the wearer. For example, to correct for hyperopia (farsightedness), the radius of curvature of the front curve is made smaller than that of the base curve, producing a lens that is overall "convex" (thicker at its center than at its edge); while, to correct for myopia (nearsightedness), the radius of curvature of the front curve is made larger than that of the base curve, producing a lens that is overall "concave" (thicker at its edge than at its center).

The button referred to above is conventionally made by a cast molding process wherein a plastic blank is molded in a generally cylindrical form and then machined on a lathe to form the base and front curves. A substantial amount of cutting is necessary, which takes a long time per lens and reduces the number of lenses that a cutting tool, usually a diamond, can make before it is worn out. Moreover, the button must be carefully centered as the cuts are made and must be alternately secured to and removed from a brass support or other fixture to enable cutting or machining of the surfaces. The button is typically secured to the brass support by wax, which is heated in order to remove the button from the support. The repeated waxings and dewaxings are time-consuming and add to the cost of the lens.

Techniques for dealing with these problems have been developed but are not entirely satisfactory. One such technique is to employ an inexpensive lathe (costing in the neighborhood of a few tens of thousands of dollars) to remove the bulk of the material and a more expensive lathe (costing more than a hundred thousand dollars) capable of more precise control to make the final cut to the desired shape. This extends the useful life of the diamond tool on the expensive lathe but introduces additional handling that partially offsets this saving.

## OBJECTS AND SUMMARY OF THE INVENTION

An object of the invention is to remedy the shortcomings of the prior art noted above by providing a method of making contact lenses that is faster and less expensive than conventional methods.

More particularly, an object of the invention is to provide a method that, as compared to conventional methods, requires less material to make a lens blank or shell and less machining to convert the blank or shell into a finished lens, thereby reducing the lathe and operator time required to make each lens and extending the useful life of the diamond cutting tool.

Another object of the invention is to provide a novel lens blank or shell that is especially adapted to the manufacture of a finished contact lens with a minimum of machining.

Another object of the invention is to provide a novel mold for making the lens shell.

In accordance with one aspect of the invention, there is provided a method of making a contact lens having a finished shape including a concave base curve and a convex front curve, the method comprising the steps of molding a plastic blank having a pair of opposite curved surfaces that are respectively approximations of the base curve and front curve and machining one or both of the pair of opposite surfaces to produce a lens having the finished shape.

In accordance with a second aspect of the invention, there is provided a blank for making a contact lens having a finished shape including a concave base curve and a convex front curve, the blank having a pair of opposite surfaces respectively approximating the base curve and front curve, whereby a minimum of machining is sufficient to convert the blank into the lens.

In accordance with a third aspect of the invention, there is provided a mold for making a blank for a contact lens having a finished shape including a concave base curve and a convex front curve, the mold comprising a concave lower mold member for receiving a sufficient quantity of a liquid monomer to make the blank and a convex upper mold member for closing with the lower mold member and imparting to the monomer a concavo-convex shape.

## BRIEF DESCRIPTION OF THE DRAWINGS

A better understanding of the objects, features and advantages of the invention can be gained from a consideration of the following detailed description of the preferred embodiments thereof, in conjunction with the appended drawing, wherein a given reference character always designates the same element or part, and wherein:

Fig. 1 is an exploded perspective view of a lens mold in accordance with the invention;

Fig. 2 is an assembled axial sectional view of the lends mold of Fig. 1;

Fig. 3 is a top plan view of a lens shell produced by the lends mold of Figs. 1 and 2;

Fig. 4 is a sectional view of the lens shell of Fig. 3 taken substantially along the line 4-4 of Fig. 3 and looking in the direction of the arrows; and

Fig. 5 is a sectional view similar to Fig. 4 illustrating a machining operation in accordance with the invention for converting the lens shell of Figs. 3 and 4 into a finished lens.

## DESCRIPTION OF THE PREFERRED EMBODIMENTS

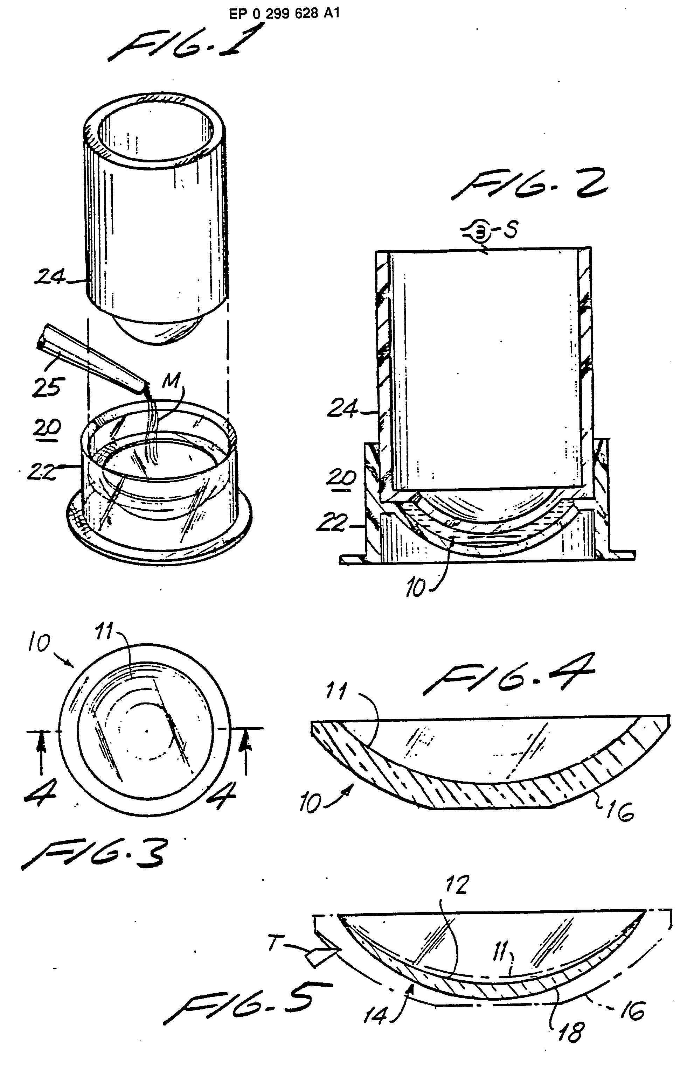

Figs. 3 and 4 show a plastic blank or lens shell 10 constructed in accordance with the invention. It is formed with a concave surface 11 that closely approximates the shape of the base curve 12 of the finished lens 14 (Fig. 5) and with a convex surface 16 that approximates the shape of the front curve 18 of the lens 14. Both surfaces 11 and 16 normally need to be pared away in a number of passes of a diamond cutting tool T as the lens rotates about its axis of symmetry in order to form the finished lens 14. However, in accordance with the invention, only a minimum of paring is necessary to convert the lens shell 10 into the finished lens 14.

The lens shell 10 is formed in a mold 20 (Figs. 1 and 2) comprising a lower concave mold member 22 and an upper convex mold member 24.

The molding method of the invention comprises the steps of molding the plastic blank or lens shell 10 having the pair of opposite surfaces 11, 16 respectively approximating the concave base curve 12 and convex front curve 18 and machining the surfaces 11 and 16 to produce a lens 14 having the proper finished shape. The machining is effected by a tool T (Fig. 5). preferably a diamond, controlled by a suitable lathe. Such lathes are well known to those skilled in the art and are available commercially.

The step of molding comprises the substeps of providing the lower and upper mold members 22, 24 (Fig. 1), pouring thereinto from a dispenser 25 a sufficient quantity of liquid monomer M to form the blank or lens shell 10, bringing the concave and convex mold members 22, 24 together as in Fig. 2 to impart a concavo-convex shape to the blank or shell 10, and supplying energy from a source S (Fig. 2) to the liquid monomer to polymerize it, thereby converting it to a solid polymer.

The energy employed for polymerization can be thermal or in the form of ultraviolet radiation. If ultraviolet radiation is employed, at least one of the mold members 22, 24 includes a portion substantially transparent to ultraviolet radiation. Preferably both of the mold members 22, 24 are made entirely of a plastic such as polyethylene that is substantially transparent to ultraviolet radiation.

When polymerization is complete, the blank or shell 10 is removed from the mold 20. The surfaces 11 and 16 of the blank are pared away to form the finished lens surfaces 12 and 18 and impart the required refractive correction. The surface 11 requires very little machining. Preferably, the base curve 12 is formed on the side of the lens shell 10 that requires the least machining.

It is necessary for a manufacturer to have only a few differently-designed convex mold members 24 to approximate the different base curves required by the wearers of contact lenses and only a few differently-designed concave mold members 22. The desired refractive correction can be made by a minimum of machining of the surfaces 11 and 16 of the blank or shell 10. Since these surfaces are respectively approximations of the desired finished curves 12 and 18 of the lens 14, only a minimum of material need be pared from the blank 10. The approximations should be so close that the ratio of the weight of scrap polymer machined or pared from the blank 10 to the original weight of the shell 10 is less than 30 and approximately equal for example to 25. This shortens the time required to produce each lens and increases the number of lenses that can be made with a given diamond tool. In contrast, the ratio of the weight of scrap polymer machined or pared from a conventional button to the original weight of the button is in the range of 65 to 70.

Thus there is provided in accordance with the invention a novel and highly-effective method of making contact lenses that is faster and less expensive than conventional methods, a novel lens blank or shell that is especially adapted to the manufacture of a finished contact lens with a minimum of machining, and a novel mold for making the lens shell. The cost of producing contact lenses by the method of the present invention is less than half the cost of producing contact lenses by conventional methods.

Many modifications of the preferred embodiments of the invention disclosed herein will readily occur to those skilled in the art upon consideration of this disclosure. For example, the nature of the monomer M, the materials of which the mold 20 is made, the specifications of the lathe for controlling the tool T, and the rate of delivery of energy from the source S can vary within wide limits. Accordingly, the invention is limited only by the appended claims.

## Claims

1. A method of making a contact lens having a finished shape including a concave base curve and a convex front curve, said method comprising the steps of molding a plastic blank having a pair of opposite curved surfaces that are respectively approximations of said base curve and front curve and machining said pair of opposite surfaces to produce a lens having said finished shape.

2. A method according to claim 1 wherein said step of molding comprises the steps of providing a lower concave mold member, pouring thereinto a sufficient quantity of liquid monomer to form said blank, providing an upper convex mold member, bringing said concave and convex mold members together to impart a concavo-convex shape to said blank, and supplying energy to said liquid monomer to polymerize it, thereby converting it to solid form.

3. A method according to claim 2 wherein said energy is thermal.

4. A method according to claim 2 wherein at least one of said mold members includes a portion substantially transparent to ultraviolet radiation and said energy comprises ultraviolet radiation.

5. A method according to claim 1 wherein said approximations are so close that the ratio of the weight of material machined from said blank to the original weight of said blank is less than 30.

6. A blank for making a contact lens having a finished shape including a concave base curve and a convex front curve, said blank having a pair of opposite surfaces respectively approximating said base curve and front curve, whereby a minimum of machining is sufficient to convert said blank into said lens.

7. A mold for making a blank for a contact lens having a finished shape including a concave base curve and a convex front curve, said mold comprising a concave lower mold for receiving a sufficient quantity of a liquid monomer to make said blank and a convex upper mold member for closing with said lower mold member and imparting to said monomer a concavo-convex shape that approximates said finished shape of said lens.

FIG.1

24

25

M

20

22

FIG.2

3-S

24

20

22

10

10

11

FIG.4

11

10

16

FIG.3

4       4

12

T

11

FIG.5

14      18      16

| | DOCUMENTS CONSIDERED TO BE RELEVANT | | EP 88305564.2 |
|---|---|---|---|

| Category | Citation of document with indication, where appropriate, of relevant passages | Relevant to claim | CLASSIFICATION OF THE APPLICATION (Int. Cl.4) |
|---|---|---|---|
| X | US - A - 4 407 766 (HAARDT)<br>  * Column 13, lines 61-64; fig. 4 *<br>-- | 1-7 | B 29 D 11/00 |
| X<br><br>Y | US - A - 4 208 364 (SHEPERD)<br>  * Claims 1,5,14; fig. 7 *<br>-- | 1,2,5-7<br><br>3,4 | |
| Y<br><br>A | US - A - 4 382 902 (FEURER)<br>  * Claims 1,2 *<br>-- | 3,4<br><br>1,2,5-7 | |
| A | US - A - 4 284 399 (NEWCOMB)<br>  * Fig. 1 *<br>-- | 1-7 | |
| A | GB - A - 1 601 327 (GRESHES)<br>  * Claims 1-5; fig. 3 *<br>-- | 1-7 | TECHNICAL FIELDS SEARCHED (Int. Cl.4)<br><br>B 29 D |
| A | US - A - 4 166 088 (NEEFE)<br>  * Totality *<br>---- | | |

The present search report has been drawn up for all claims

| Place of search | Date of completion of the search | Examiner |
|---|---|---|
| VIENNA | 10-11-1988 | REININGER |